# EUROPÄISCHE PATENTSCHRIFT

(11) **EP 0 731 008 B1**
(45) Veröffentlichungstag und Bekanntmachung des Hinweises auf die Patenterteilung: **28.01.1998**
(21) Anmeldenummer: 96102803.2
(22) Anmeldetag: 24.02.1996
(51) Int. Cl.: B60R 25/10

(54) **Verfahren zur Sicherung von Fahrzeugen vor unbefugter Nutzung**
Vehicle security method for preventing unauthorised use
Procédé de sécurité pour prévenir une utilisation non-autorisée d'un véhicule

(30) Priorität: 10.03.1995 DE 19508369
(43) Veröffentlichungstag der Anmeldung: 11.09.1996
(73) Patentinhaber: DAIMLER-BENZ AKTIENGESELLSCHAFT, 70567 Stuttgart (DE)
(72) Erfinder: Lenart, Siegleif, Dipl.-Ing., 71394 Kerner (DE); Rick, Thomas, Dipl.-Ing., 71522 Backnang (DE); Wagner, Peter, Ing., 73630 Remshalden (DE); Huy, Gerrit, Dipl.-Math., Dipl.-Vw., 70599 Stuttgart (DE); Piske, Ralf, Dipl.-Ing., 88682 Salem (DE)

(56) Entgegenhaltungen:
- EP-A- 0 387 581
- EP-A- 0 451 482
- DE-A- 4 310 098
- DE-A- 4 320 174
- US-A- 4 805 722
- DATABASE WPI Section PQ, Week 9431 Derwent Publications Ltd., London, GB; Class Q17, AN 94-253750 XP002006309 A-9 202 255 (VR OPTO BV) , 18.Juli 1994

## Beschreibung

Die Erfindung betrifft ein Verfahren zur Sicherung von Fahrzeugen vor unbefugter Nutzung, nach dem Oberbegriff von Anspruch 1, wie es beispielsweise aus der älteren Patentanmeldung EP-A-0 387 581 als bekannt hervorgeht.

Dieses Dokument offenbart eine Anlage bzw. ein Verfahren zur Sicherung von Fahrzeugen vor unbefugter Nutzung, wobei fahrzeugseitig eine Kommunikationsstruktur den Datenaustausch zumindest zwischen einer Empfangseinrichtung eines mobilen Kommunikationssystem, einem Diebstahlschutzsteuergerät und einem betriebsnotwendigen Steuergerät ermöglicht. Zudem ist ein Sendeeinrichtung vorgesehen, welche auf Anforderung des Benutzers vor jeder Inbetriebnahme des Fahrzeugs ein Meldesignal an eine Zentrale sendet, wobei das Meldesignal zumindest ein eingegebenes Codewort umfaßt. Bei einer besonderen Ausführung umfaßt das Meldesignal neben dem eingegebenen Codewort auch ein Ortssignal, welches den aufgrund einer fahrzeugseitig durchgeführten Ortung ermittelten aktuellen Ort des Fahrzeugs repräsentiert. Die Empfangseinrichtung empfängt von der Zentrale ausgesandte Daten, deren Empfang das betriebsnotwendige Steuergerät freigibt und dadurch die Benutzung des Fahrzeugs ermöglicht.

Als nachteilig wird dabei angesehen, daß bei jeder Fahrzeuginbetriebnahme ein Datenaustausch zwischen dem Fahrzeug und der Zentrale stattfindet. Bei einer entsprechenden Anzahl von angewendeten Systemen muß daher eine große Kapazität an Sendeeinrichtungen und Sendefrequenzen bereitgestellt werden. Zudem besteht keine Möglichkeit den Betrieb des Fahrzeugs zu unterbinden oder das Fahrzeug zu orten, wenn eine unbefugte Nutzung festgestellt wird. Ferner ist es nicht möglich, daß Fahrzeug zu orten, wenn es mittels eines Transporters an einen anderen Ort gebracht wird.

Ferner beschreibt die NL 9202255 A ein Verfahren zur Ortung von Fahrzeugen, bei dem ein Benutzer bei Ablauf einer Nutzungsberechtigung eine autorisierte Stelle aufsuchen oder sich mit dieser in Verbindung setzen muß, wodurch der Aufenthaltsort des Fahrzeugs festgestellt werden kann, um eine Nutzungsverlängerung zu erhalten. Die Kenntnis des Aufenthaltsorts ist dabei eine Grundvoraussetzung für die autorisierte Stelle um eine Nutzungsverlängerung durchzuführen. Zur Nutzungsverlängerung ist es erforderlich, eine bestimmte Vorrichtung im Regelsystem des Fahrzeugs auszutauschen oder die bestimmte Vorrichtung über eine Fernbedienung zurückzusetzen.

Als nachteilig wird dabei angesehen, daß das Fahrzeug über kein Ortungssystem zur Feststellung des eigenen Standorts verfügt. Zudem besteht keine Möglichkeit den Betrieb des Fahrzeugs zu unterbinden oder das Fahrzeug zu orten, wenn eine unbefugte Nutzung festgestellt wird. Ferner ist es nicht möglich, daß Fahrzeug zu orten, wenn es mittels eines Transporters an einen anderen Ort gebracht wird.

Auch die nicht vorveröffentlichte DE-P. 44 40 975.3-51 offenbart ein Verfahren zur Sicherung von Fahrzeugen vor unbefugter Nutzung. Gemäß dieser Schrift ist in dem Fahrzeug ein Diebstahlschutzsteuergerät und eine Empfangseinrichtung eines mobilen Kommunikationssystems angeordnet. Eine Kommunikationsstruktur seitens des Fahrzeugs ermöglicht zum einen den Austausch von Daten zwischen einem Diebstahlschutzsteuergerät und der Empfangseinrichtung und andererseits den Austausch von Daten zwischen dem Diebstahlschutzsteuergerät und zumindest einem betriebsnotwendigen Steuergerät des Fahrzeugs. Von einer Zentrale werden, solange ein Fahrzeug nicht als gestohlen gemeldet oder sofern nicht eine andere unbefugte Nutzung des Fahrzeugs festgestellt wurde, in regelmäßigen zeitlichen Abständen über das mobile Kommunikationssystem Signale an das Fahrzeug übermittelt, die von der Empfangseinrichtung empfangen werden. Der Empfang der Signale wird von der Empfangseinrichtung über die Kommunikationsstruktur an das Diebstahlschutzsteuergerät weitergeleitet. Die Signale werden erkannt und wenn sie als an das Fahrzeug gerichtet erkannt werden, so wird der Fahrzeugbetrieb für eine vorgegebene Zeitdauer, die größer ist als der zeitliche Abstand zweier aufeinanderfolgender Signale, freigegeben. Wird vor Ablauf des Zeitraums, für den der Fahrzeugbetrieb freigegeben ist, kein Signal empfangen, so wird die Freigabe des Fahrzeugbetriebs nicht verlängert, das Diebstahlschutzsteuergerät steuert dann über die Kommunikationsstruktur das zumindest eine betriebsnotwendige Steuergerät an und verhindert den weiteren Betrieb dieses Steuergeräts zumindest bei dem nächsten Versuch, das Fahrzeug in Betrieb zu nehmen.

Durch diese Maßnahme wird zwar verhindert, daß ein Fahrzeug über einen längeren Zeitraum hinweg unbefugt benutzt wird. Auch ist der Betrieb nicht von vom Fahrzeug abgesandten Signalen, die gestört werden können, abhängig, sondern ausschließlich von dem Empfang der von der Zentrale ausgesandten Signale, so daß ein Stören bzw. Zerstören des Kommunikationssystems keine verlängerte Nutzung des Fahrzeugs erlaubt. Nachteilig an diesem Verfahren ist es, daß es nicht möglich ist, das Fahrzeug zu orten. Daher ist es beispielsweise nach dem Entwenden des Fahrzeugs weiterhin möglich das Fahrzeug ungefährdet auf einem Transporter an einen anderen Ort zu verbringen. Ferner kann zwischen dem Zeitpunkt des Beginns der unbefugten Nutzung des Fahrzeugs und der Weiterleitung der Information über die unbefugte Benutzung an die Zentrale ein längerer Zeitraum vergehen, so daß das Aussenden der Signale erst einen beträchtlichen Zeitraum nach Beginn der unbefugten Benutzung erfolgen kann. Während dieses Zeitraums kann die unbefugte Nutzung des Fahrzeugs ungehindert fortgesetzt werden. Ferner ist, wenn eine große Anzahl von Fahrzeugen erforderlich ist eine sehr große Sendekapazität für die in regelmäßigen zeitlichen Abständen ausgesandten Signale erforderlich. Deshalb ist dieses Verfahren nur dazu geeignet, eine eng begrenzte Anzahl von Fahrzeugen zu sichern.

Desweiteren ist es beispielsweise aus dem Artikel "Satellitenhilfe gegen Auto-Klau" von R. Gramm in der Zeitschrift Funkschau Heft 16/1993 Seiten 42 bis 45 bekannt, ein fahrzeugseitig angeordnetes Ortungssystem vorzusehen, das laufend oder in regelmäßigen Abständen den geographischen Ort bestimmt, an dem sich das Fahrzeug befindet und das diese Ortsangaben über eine fahrzeugseitige Sendeeinrichtung an eine Zentrale weiterleitet. In dieser Zentrale ist eine Empfangseinheit zum Empfang und zum Auswerten der von der Sendeeinrichtung ausgesandten Ortsangaben vorhanden. In der Zentrale kann somit laufend bzw. in regelmäßigen Abständen der Ort des Fahrzeugs überwacht werden.

Diese Einrichtung hat den Nachteil, daß sie es nicht erlaubt, den Betrieb des Fahrzeugs zu unterbinden. Die Verfolgung des Fahrzeugs durch die Zentrale kann auch beispielsweise durch Zerstörung der fahrzeugseitigen Sendeeinrichtung oder des Ortungssystems verhindert werden. Ferner muß eine große Kapazität an Sendeeinrichtungen und Sendefrequenzen bereitgestellt werden, wenn laufend eine große Anzahl von Fahrzeugen verfolgt werden soll. Wird als mobiles Kommunikationssystem beispielsweise ein digitales Funktelefon genutzt fallen hohe Kommunikationsgebühren an um laufend die Ergebnisse der Ortung des Fahrzeugs an die Zentrale weiterzuleiten.

Aufgabe der Erfindung ist es, die unbefugte Nutzung eines Fahrzeugs auch dann sicher zu verhindern, wenn die Kommunikation zwischen Fahrzeug und Zentrale unterbunden wird und andererseits das Fahrzeug zumindest dann, wenn eine unbefugte Benutzung vorliegt zumindest zu orten. Dabei soll das System kostengünstig arbeiten und auch dazu in der Lage sein, eine große Anzahl von Fahrzeugen zu überwachen.

Diese Aufgabe wird bei einem gattungsgemäßen Verfahren zur Sicherung von Fahrzeugen vor unbefugter Benutzung erfindungsgemäß mit den kennzeichnenden Merkmalen des Anspruchs 1 gelöst, wobei die Merkmale der Unteransprüche vorteilhafte Aus- und Weiterbildungen kennzeichnen.

Die Kommunikation zwischen Fahrzeug und Zentrale ist bidirektional. Dadurch ist es nicht nur möglich ausschließlich eine Positionsmeldung des Fahrzeugs an die Zentrale zu übertragen oder ausschließlich von der Zentrale Freigabesignale an das Fahrzeug zu übertragen sondern es ist möglich die Kommunikation bedarfsgerecht zu gestalten. Die notwendige Informationsübertragung wird dadurch wesentlich reduziert, daß das Freigabesignal nicht laufend ausgesendet wird, sondern nur auf Anforderung durch das Fahrzeug. Andererseits wird gleichzeitig die Zentrale über den aktuellen Ort des Fahrzeugs zumindest dann informiert, wenn eine Freigabe des Fahrzeugs nicht erfolgt. Die Kommunikation zwischen dem Fahrzeug und der Zentrale muß aufrechterhalten bleiben, damit rechtzeitig das Freigabesignal von der Zentrale an das Fahrzeugs übermittelt werden kann.

Im übrigen ist die Erfindung an Hand eines in der Zeichnung dargestellten Ausführungsbeispieles nachfolgend noch erläutert; dabei zeigen:
- Fig. 1: das Flußdiagramm eines Verfahrens zur Anmeldung eines Fahrzeugs bei einer Zentrale und
- Fig. 2: das Flußdiagramm eines erfindungsgemäßen Verfahrens, das besonders für die Verwendung in Privatfahrzeugen geeignet ist.

Zur Durchführung muß in dem Fahrzeug folgende Infrastruktur gegeben sein. Eine Sendeeinrichtung und eine Empfangseinrichtung zum Übermitteln von Daten zwischen dem Fahrzeug und einer Zentrale. Die Sendeeinrichtung und die Empfangseinrichtung können in einer gemeinsamen Anlage zusammengefaßt sein. Es kann sich dabei zum Beispiel um ein Mobiltelefon handeln, das digitale Daten überträgt, wie z.B. D-Netz-Telefone. Die fahrzeugseitige Telefonanlage muß allerdings dazu in der Lage sein, selbsttätig eine Verbindung mit der Zentrale herzustellen. Um währenddessen die Geprächsfähigkeit des Telefons zu erhalten sollte die zum Zweck der Überprüfung der berechtigten Benutzung des Fahrzeugs aufgebaute Verbindung (jegliche Form von Datenaustausch) im Hintergrund eventuell von Fahrzeuginsassen durchgeführter Gespräche durchgeführt werden können. Die Datenübertragung bzw. die Übertragung von Signale zwischen dem Fahrzeug und der Zentrale und umgekehrt erfolgt dabei stets in codierter (chiffriert, etc.) Form um zu verhindern, daß Dritte entsprechende Signale aussenden können, die von der Zentrale als von einem Fahrzeug kommend, oder von dem Fahrzeug als von der Zentrale kommend gewertet werden. Die von Fahrzeug und Zentrale ausgesandten Signale müssen stets eine fahrzeugspezifische Kennung aufweisen, um eine Verwechslung zwischen Fahrzeugen zu verhindern und nicht fälschlicherweise ein falsches Fahrzeug zu sperren oder freizugeben.

Ferner wird in dem Fahrzeug eine Kommunikationsstruktur benötigt, die eine Kommunikation der Sendeeinrichtung und der Empfangseinrichtung mit dem Diebstahlschutzsteuergerät und zumindest einem betriebsnotwendigen Steuergerät verbindet. Als Kommunikationsstruktur können Datenbusse wie z.B. CAN, VAN oder D2B dienen. Auch die Übermittlung der Daten über die Kommunikationsstruktur kann in kodierter Form erfolgen.

Zur Ortung wird in dem Fahrzeug ein Ortungssystem wie beispielsweise GPS (Global Positioning System) benötigt. Auch dieses ist über die Kommunikationsstruktur des Fahrzeugs mit dem Diebstahlschutzsteuergerät verbunden.

Dabei kann das Diebstahlschutzsteuergerät oder die Gesamtheit der an die Kommunikationsstruktur angeschlossenen Steuergeräte laufend Überprüfungen der Systemintegrität vornehmen und bei einem Angriff auf die Systemintegrität die Außerbetriebnahme des zumindest einen betriebsnotwendigen Steuergeräts und das Absetzen von Ortssignalen veranlassen.

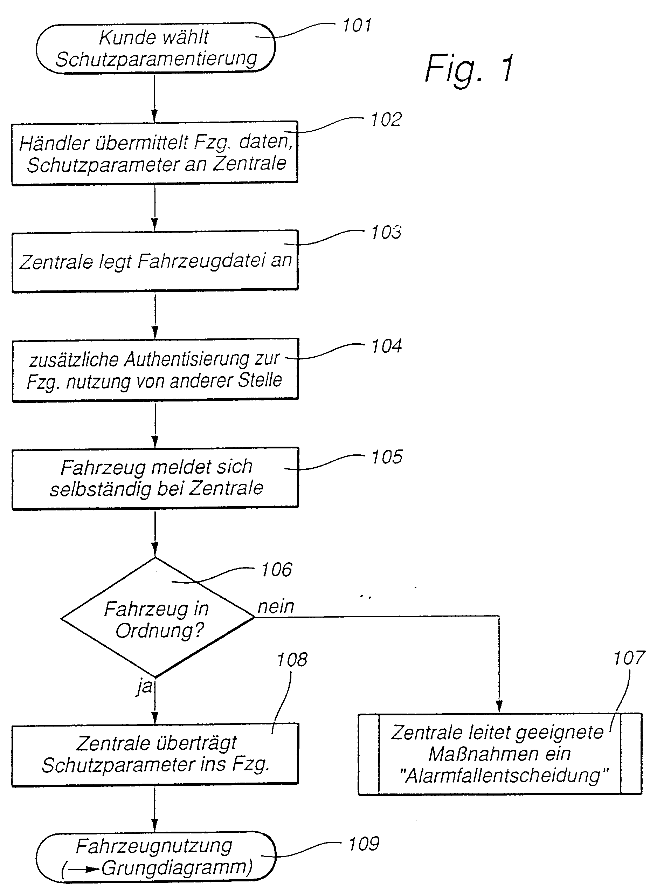

Die Fig. 1 zeigt das Flußdiagramm einer Initialisierung zur Anmeldung eines Fahrzeugs bei einer Zentrale, die den Betrieb der Fahrzeuge insoweit überwacht, daß beim Auftreten einer unbefugten Benutzung entweder durch die Zentrale veranlaßt oder durch Nichtaussenden von Freigabesignalen durch die Zentrale der weitere Betrieb des Fahrzeugs verhindert wird und eine Verfolgung des Ortes des Fahrzeugs erfolgt.

Gemäß dem Schritt 101 wählt der Käufer des Fahrzeugs aus einer Auswahl von Schutzparametern die Schutzparameter aus, die er für die Sicherung seines Fahrzeugs als wünschenswert erachtet. Die Messung des Ablaufs jedes Schutzparameters erfolgt ab seiner letzten Freigabe. Die im folgenden dargelegten Schutzparameter können dabei sowohl einzeln als auch in beliebiger Kombination miteinander angewandt werden. Dabei können sowohl "UND"-Verknüpfungen als auch "ODER"-Verknüpfungen zwischen den Schutzparametern getroffen werden. Die Schutzparameter können beispielsweise bestehen aus der zurückgelegten Fahrstrecke, der von dem Fahrzeugbetrieb unabhängig gemessenen Zeit, der Betriebsdauer des Fahrzeugs, einem geographisch begrenztes Gebiet sowie der Anzahl der Inbetriebnahmen des Fahrzeugs. Gemäß dem Schritt 102 werden diese Daten zusammen mit einer Identifizierung des Fahrzeugs an die ortsfeste Zentrale weitergeleitet. Dort wird gemäß dem Schritt 103 eine entsprechende Datei für das Fahrzeug angelegt. Gemäß Schritt 104 können zusätzlich auch noch weitere Daten in der Datei abgelegt werden, wie zum Beispiel die Freigabe des Fahrzeugs für den Verkehr durch den TÜV, die Zulassungsstelle oder die Versicherung.

Gemäß dem Schritt 105 meldet sich das Fahrzeug selbständig bei der Zentrale, beispielsweise bei der ersten Inbetriebnahme. Gemäß dem Schritt 106 wird überprüft, ob die Anmeldung des Fahrzeugs bei der Zentrale in Ordnung ist, das heißt, ob eine entsprechende Datei für das Fahrzeug ordnungsgemäß angelegt ist und ob eine Freigabe für das Fahrzeug vorliegt. Ist dies nicht der Fall so werden von der Zentrale gemäß dem Schritt 107 geeignete Maßnahmen unternommen. Der Betrieb des Fahrzeugs kann verhindert werden, sofern ein den aktuellen geographischen Ort des Fahrzeugs repräsentierendes Ortssignal noch nicht von dem Fahrzeug an die Zentrale übermittelt worden ist, wird dies nun angefordert. Unter Angabe des Aufenthaltsortes können beispielsweise entsprechende Behörden, wie die Polizei benachrichtigt werden.

Wurde dagegen im Schritt 106 festgestellt, daß das Fahrzeug in Ordnung ist, so wird gemäß dem Schritt der zumindest eine Schutzparameter und ggf. die logische Verknüpfung zwischen den Schutzparametern an das Fahrzeug übermittelt. Gemäß dem Schritt 109 wird nunmehr die Nutzung des Fahrzeugs überwacht. Durch ein fahrzeugseitiges Diebstahlschutzsteuergerät wird nunmehr überwacht, ob der zumindest eine zu überwachenden Parameter, den zugehörigen als Schutzparameter vorgegebenen Wert überschreitet. Sobald die vorgegebene Kombination von Schutzparametern zu dem logischen Schluß führt, daß eine relevante Überschreitung von Schutzparametern vorliegt, verfällt die Freigabe des Fahrzeugs durch das Diebstahlschutzsteuergerät. Der weitere Betrieb des Fahrzeugs wird dann unterbunden, in dem zumindest ein betriebsnotwendiges Steuergerät, wie zum Beispiel die elektronische Motorsteuerung oder die elektronische Getriebesteuerung, außer Betrieb genommen wird, sofern nicht rechtzeitig ein Freigabesignal von der fahrzeugseitigen Empfangseinrichtung empfangen und über die fahrzeugeigene Kommunikationsstruktur an das Diebstahlschutzsteuergerät weitergeleitet wird. Die Außerbetriebnahme wird später noch beschrieben.

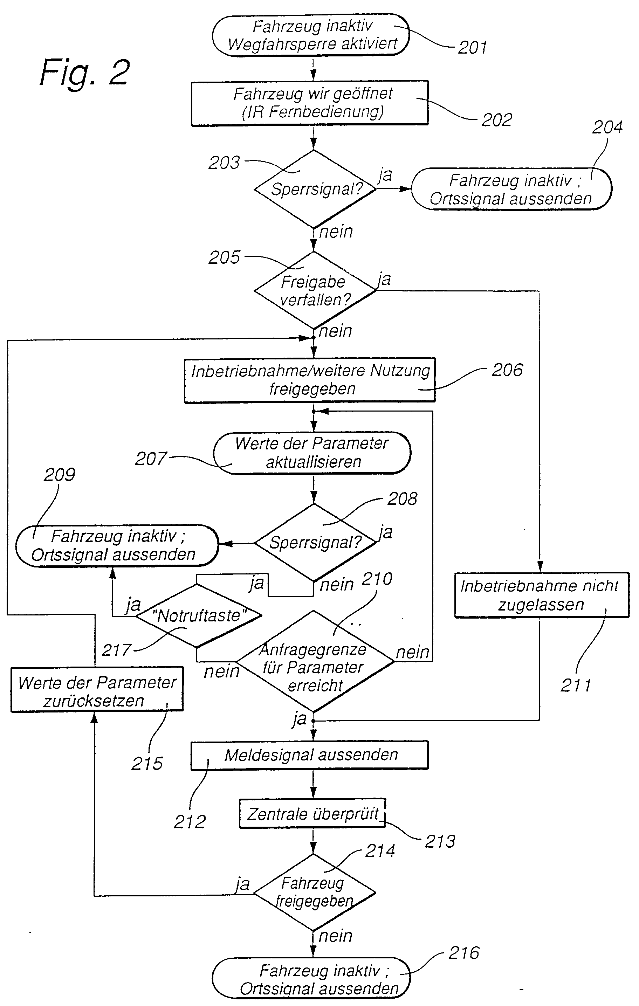

Die Fig. 2 zeigt das Flußdiagramm eines erfindungsgemäßen Verfahrens, wie es insbesondere für die Überwachung auf unbefugte Benutzung eines Privatfahrzeugs geeignet ist. Bei Privatfahrzeugen kann in der Regel davon ausgegangen werden, daß die einzig mögliche unbefugte Nutzung des Fahrzeugs der Diebstahl desselben ist. Ist das Fahrzeug gemäß Schritt 201 ordnungsgemäß stillgesetzt, so wird der befugte Benutzer das Fahrzeug in einem ersten Schritt der Inbetriebnahme die verschlossenen Türen Fahrzeugs öffnen wollen. Dies kann gemäß Schritt 202 mit einem codierte Daten aussendenden Schlüssel getan werden. Das Diebstahlschutzsteuergerät kann dabei den Versuch einer Inbetriebnahme des Fahrzeugs ohne Berechtigung - die Berechtigung wird durch den als gültig erkannten Code des Schlüssels nachgewiesen - als Diebstahlversuch werten und eine Außerbetriebnahme des Fahrzeugs sowie ein Aussenden eines Ortssignals veranlassen. Gemäß dem Schritt 203 wird nunmehr überprüft ob in dem Zeitraum während das Fahrzeug stillgesetzt war, ein von der Zentrale ausgesandtes Sperrsignal empfangen worden ist. Ist dies der Fall so wird gemäß dem Schritt 204 von dem Diebstahlschutzsteuergerät das zumindest eine betriebsnotwendige Steuergerät, hier die Motorsteuerung, außer Betrieb genommen. Ein Ortssignal wird abgesandt.

Andernfalls wird gemäß dem Schritt 205 überprüft, ob die Freigabe verfallen ist. Ist dies der Fall so wird gemäß Schritt 211 die Inbetriebnahme des Fahrzeugs nicht zugelassen, indem zumindest ein betriebsnotwendiges Steuergerät außer Betrieb genommen wird. Eine Meldung darüber an den Fahrer kann beispielsweise durch Anzeigen am Armaturenbrett erfolgen. An den Schritt 211 schließt sich der Schritt 212 an.

Wurde dagegen im Schritt 205 nicht festgestellt, daß die Freigabe verfallen ist, so wird gemäß Schritt 206 die Inbetriebnahme des Fahrzeugs und seine weitere Nutzung freigegeben, eine vorhandene Wegfahrsperre wird deaktiviert. Im darauffolgenden Schritt 207 werden die Werte der überwachten Parameter aktualisiert. Im Schritt 208 wird abgefragt, ob ein Sperrsignal empfangen wurde. Ist dies der Fall so, wird gemäß Schritt 209 die Inbetriebnahme des Fahrzeugs nach der nächsten Außerbetriebnahme des Fahrzeugs verhindert, indem zumindest dann ein betriebsnotwendiges außer Betrieb genommen wird. Alternativ kann der Fahrzeugbetrieb progressiv beendet werden, indem beispielsweise die Fahrleistungen des Fahrzeugs über die Motorsteuerung und/oder ggf. die Getriebesteuerung progressiv abgesenkt werden, bis das Fahrzeug langsam den Stillstand erreicht. Bei Stillstand des Fahrzeugs kann dann das betriebsnotwendige Steuergerät (Motorsteuerung, Getriebesteuerung) außer Betrieb genommen werden. Das Fahrzeug ist stillgesetzt. Dies verhindert, daß das Fahrzeug nach dem Empfang eines Sperrsignals noch während eines großen Zeitraums weiterbewegt wird. Mit Eingang des Sperrsignals kann zusätzlich periodisch in einer festgelegten zeitlichen Abfolge ein aktuelles Ortssignal ausgesandt werden. Die zeitlich festgelegte Abfolge besteht aus zwei kurz nacheinander, beispielsweise innerhalb weniger als einer Minute oder sogar weniger als 30 Sekunden, abgesandten Ortssignalen und einer sich daran anschließenden Wartezeit ohne Aussenden eines Ortssignals. Das zweimalige kurz hintereinander stattfindende Aussenden des Ortssignals soll es der Zentrale erlauben, nicht nur den aktuellen Ort des Fahrzeugs sondern auch seine Fahrtrichtung zu bestimmen. Der Minimale zeitliche Abstand ist dabei nach unten durch die Auflösung des Ortungssystems festgelegt. Die sich anschließende Wartezeit soll einerseits so gering gewählt werden, daß ein vernünftiges Verfolgen des Fahrzeugs von der Zentrale aus ermöglicht wird und andererseits eine Überlastung der Zentrale durch einen zu großen Dateneingang zu vermeiden. AQuch ein ständiges Aussenden des Ortungssignals beispielsweise alle 30 Sekunden eines, ist möglich.

Wurde im Schritt 208 festgestellt, daß ein Sperrsignal nicht empfangen wurde, so wird im Schritt 217 überprüft, ob eine von einem Insassen willkürlich betätigbare Schalteinrichtung, beispielsweise sogenannte "Notruftaste" betätigt wurde. Ist dies der Falls, so wird entweder die Zentrale alarmiert und zumindest ein Ortssignal ausgesandt oder es wird zum Schritt 209 gesprungen und das Fahrzeug außer Betrieb genommen. Andernfalls wird im Schritt 210 überprüft, ob die Freigabe des Fahrzeugs verfallen ist. Ist dies nicht der Fall, so wird zum Schritt 207 zurückgesprungen. Andernfalls wird im Schritt 212 von dem Fahrzeug eine Verbindung zur Zentrale aufgebaut und ein Meldesignal ausgesandt.

Gemäß dem Schritt 213 wird überprüft, ob eine weitere Freigabe des Fahrzeugs stattfinden kann. Dies ist dann der Fall, wenn in der Zentrale kein Hinweis auf eine unbefugte Benutzung vorliegt, also dann, wenn beispielsweise ein Diebstahl des Fahrzeugs, eine Verschrottung des Fahrzeugs, ein Abmelden des Fahrzeugs bei der Zulassungsbehörde oder ein Ablauf des Versicherungsschutzes des Fahrzeugs nicht an die Zentrale gemeldet ist. Nur in diesem Fall wird von der Zentrale ein Freigabesignal ausgesandt.

Gemäß dem Schritt 214 wird dann, wenn von dem Fahrzeug nach der Aussendung des Meldesignals auch ein Freigabesignal empfangen wurde zum Schritt 215 übergegangen und die Werte der überwachten Parameter werden zurückgesetzt. Das Fahrzeug ist bis zum erneuten Verfall der Freigabe freigeschaltet. Es wird dann zum Schritt 206 zurückgesprungen. Es kann ferner überprüft werden, ob seit dem ersten Aussenden eines Meldesignals nach dem letzten Empfang eines Freigabesignals ein längerer Zeitraum als ein definierter Abfragezeitraum vergangen ist. Ist dies nicht der Fall, so kann auch ohne den Empfang des Freigabesignals zum Schritt 207 gesprungen werden. Dies erlaubt es dann, wenn beispielsweise Abschattungen der Verbindung zwischen der Zentrale und dem Fahrzeug vorliegen, nicht sofort das Fahrzeug außer Betrieb zu nehmen, sondern während des Abfragezeitraums weitere Versuche eine Verbindung herzustellen durchzuführen und so doch noch eine Freigabesignal zu erhalten. Der Abfragezeitraum ist beispielsweise ein eng begrenzter Zeitraum von beispielsweise wenigen Minuten, beispielsweise 5 Minuten, oder von wenigen Kilometern, beispielsweise 20 Kilometern. Es kann aber auch ein größzügig bemessener Abfragezeitraum von mehrere Stunden oder mehreren hundert Kilometern gewählt werden. Der Abfragezeitraum kann individuell nach den Wünschen des Halters des Fahrzeugs festgelegt werden. Grundsätzlich ist jeder der Größen, die zu einem Verfall der Freigabe führen können auch als Kriterium für die Dauer des Abfragezeitraums geeignet.

Wird im Schritt 214 festgestellt, daß ein Freigabesignal nicht empfangen wurde bzw. ein eingeräumter Abfragezeitraum ohne Erhalt eines Freigabesignals verstrichen ist, so wird zum Schritt 216 gesprungen. Gemäß diesem Schritt wird in gleicher Weise wie in den Alternativen des Schritts 209 der weitere Betrieb des Fahrzeugs unterbunden, in dem entweder die Inbetriebnahme des Fahrzeugs nach der nächsten Außerbetriebnahme oder aber eine progressive Außerbetriebnahme des Fahrzeugs erfolgt.

Ist ein Fahrzeug einmal dadurch außer Betrieb gesetzt worden, daß ein betriebsnotwendiges Steuergerät auf Veranlassung des Diebstahlschutzsteuergeräts, außer Betrieb genommen wurde, so kann die Wiederinbetriebnahme des Fahrzeugs beispielsweise dadurch erfolgen, daß die Empfangseinrichtung weiterbetreiben wird und beim Empfang eines Betriebsfreigabesignal, das von der Zentrale ausgesandt werden kann, dieses an das Diebstahlschutzsteuergerät weitergeleitet wird. Das Diebstahlschutzsteuergerät prüft das Signal und wenn es als gültig erkannt wird hebt es die Sperrungen der betriebsnotwendigen Steuergeräte auf. Das Fahrzeug ist wieder fahrbereit. Das Aussenden des Betriebsfreigabesignals durch die Zentrale erfolgt beispielsweise dann, wenn durch eine Behörde oder den Eigentümer des Fahrzeugs, eine entsprechende Meldung bei der Zentale eingeht.

Alternativ oder zusätzlich dazu kann vorgesehen werden, daß die Wiederinbetriebnahme nur dann erfolgt, wenn über eine mit dem Diebstahlschutzsteuergerät verbundenen Dateneingabeschnittstelle ein von diesem als gültig erkannter Code eingegeben wird. Dabei ist es von Vorteil, wenn die Anzahl der einen entsprechenden Code erzeugenden Geräte gering ist und sie einer Kontrolle durch die Zentrale unterliegen.

## Patentansprüche

1. Verfahren zur Sicherung von Fahrzeugen vor unbefugter Nutzung, wobei fahrzeugseitig eine Kommunikationsstruktur den Datenaustausch zumindest zwischen einer Empfangseinrichtung eines mobilen Kommunikationssystems, einem Diebstahlschutzsteuergerät und zumindest einem betriebsnotwendigen Steuergerät ermöglicht, und wobei fahrzeugseitig die Empfangseinrichtung und eine Sendeeinrichtung eine Übermittlung von Daten zwischen dem Fahrzeug und einer Zentrale ermöglichen,
**dadurch gekennzeichnet**,
daß
• das Diebstahlschutzsteuergerät bei Verfall einer Freigabe über die Sendeeinrichtung ein Meldesignal an die Zentrale absendet, das zumindest eine Identifizierung des Fahrzeugs beinhaltet,
• aufgrund des empfangenen Meldesignals seitens der Zentrale überprüft wird, ob ein Hinweis auf eine unbefugte Nutzung des Fahrzeugs vorliegt,
wobei dann, wenn ein solcher Hinweis nicht vorliegt, ein Freigabesignal, welches den weiteren Betrieb des Fahrzeugs ermöglicht, von der Zentrale an das Fahrzeug übermittelt wird,
• bei Empfang des Freigabesignals das Diebstahlschutzsteuergerät die Freigabe um ein vorgegebenes Maß verlängert und daß
• zumindest dann, wenn von der Empfangseinrichtung kein Freigabesignal empfangen wird, spätestens nach Ablauf eines definierten Abfragezeitraums die Außerbetriebnahme des zumindest einen betriebsnotwendigen Steuergeräts veranlaßt und wenigstens ein Ortssignal, das den aufgrund einer fahrzeugseitig durchgeführten Ortung ermittelten aktuellen Ort des Fahrzeugs repräsentiert, von der Sendeeinrichtung des Fahrzeugs ausgesandt wird.

2. Verfahren nach Anspruch 1,
**dadurch gekennzeichnet,**
daß das Diebstahlschutzsteuergerät mit einer Wegfahrsperre in Verbindung steht, wobei ein Versuch das Fahrzeug ohne Berechtigung in Betrieb zu nehmen zum Aussenden eines diese Information beinhaltenden Meldesignals führt.

3. Verfahren nach Anspruch 2,
**dadurch gekennzeichnet,**
daß ein die Information über einen Versuch das Fahrzeug ohne Berechtigung in Betrieb zu nehmen beinhaltendes Meldesignal als Hinweis auf eine unbefugte Benutzung des Fahrzeugs gewertet wird und ein Freigabesignal nicht mehr ausgesandt wird.

4. Verfahren nach Anspruch 1,
**dadurch gekennzeichnet,**
daß das Diebstahlschutzsteuergerät eine Funktionsüberprüfung zumindest des Kommunikationssystems, der Sendeeinrichtung, der Empfangseinrichtung und des Diebstahlschutzsteuergeräts umfaßt, wobei eine Beeinträchtigung der Systemintegrität zum Aussenden eines diese Information beinhaltenden Meldesignals führt.

5. Verfahren nach Anspruch 4,
**dadurch gekennzeichnet,**
daß ein Informationen über die Beeinträchtigung der Systemintegrität beinhaltendes Meldesignal als Hinweis auf eine unbefugte Benutzung des Fahrzeugs gewertet wird und ein Freigabesignal nicht mehr ausgesandt wird.

6. Verfahren nach einem der Ansprüche 1 bis 5,
**dadurch gekennzeichnet,**
daß das ausgesandte Meldesignal das Ortssignal beinhaltet.

7. Verfahren nach Anspruch 1,
**dadurch gekennzeichnet,**
daß dann, wenn nach dem Aussenden eines Meldesignals ein Freigabesignal von der Empfangseinrichtung des Fahrzeugs nicht empfangen wird, periodisch in einer festgelegten zeitlichen Abfolge ein aktuelles Ortssignal ausgesandt wird.

8. Verfahren nach Anspruch 1,
**dadurch gekennzeichnet,**
daß die zeitlich festgelegte Abfolge aus zwei innerhalb eines Intervalls aufeinanderfolgend ausgesandten Ortssignalen und einer sich an das Intervall anschließenden Wartezeit ohne Aussenden eines Ortssignals besteht.

9. Verfahren nach Anspruch 8,
**dadurch gekennzeichnet,**
daß das Intervall eine Dauer von weniger als einer Minute, insbesondere von weniger als 30 Sekunden, aufweist.

10. Verfahren nach Anspruch 1,
**dadurch gekennzeichnet,**
daß der Verfall der Freigabe in einem Überschreiten eines vorgegebenen, von der Benutzung des Fahrzeugs unabhängigen Zeitintervalls besteht.

11. Verfahren nach Anspruch 1,
**dadurch gekennzeichnet,**
daß der Verfall der Freigabe in einem Überschreiten eines vorgegebenen Betriebsintervalls für die Betriebsdauer des Fahrzeugs besteht.

12. Verfahren nach Anspruch 1,
**dadurch gekennzeichnet,**
daß der Verfall der Freigabe in einem Überschreiten einer vorgegebenen Fahrstrecke besteht.

13. Verfahren nach Anspruch 1,
**dadurch gekennzeichnet,**
daß der Verfall der Freigabe in einem Überschreiten einer vorgegebenen Anzahl von Inbetriebnahmen des Fahrzeugs besteht.

14. Verfahren nach Anspruch 1,
**dadurch gekennzeichnet,**
daß der Verfall der Freigabe darin besteht, daß die von dem Fahrzeug durchgeführte Ortung zu der Feststellung führt, daß es ein vorgegebenes, bestimmtes geographisches Gebiet verlassen hat.

15. Verfahren nach Anspruch 1,
**dadurch gekennzeichnet,**
daß der Verfall der Freigabe darin besteht, daß die von dem Fahrzeug durchgeführte Ortung zu der Feststellung führt, daß ein vorgegebenes, bestimmtes geographisches Gebiet befahren wird.

16. Verfahren nach Anspruch 1,
**dadurch gekennzeichnet,**
daß der Verfall der Freigabe durch willkürliche Betätigung einer Schalteinrichtung durch einen Insassen des Fahrzeugs erfolgt.

17. Verfahren nach Anspruch 16,
**dadurch gekennzeichnet,**
daß die Schalteinrichtung ein vom Fahrer betätigbarer Schalter ist.

18. Verfahren nach Anspruch 1,
**dadurch gekennzeichnet,**
daß bei dem Empfang eines von der Zentrale ausgesandten Sperrsignals durch die Empfangseinrichtung durch das Diebstahlschutzsteuergerät eine Außerbetriebnahme zumindest eines betriebsnotwendigen Steuergeräts erfolgt.

19. Verfahren nach Anspruch 18,
**dadurch gekennzeichnet,**
daß bei der Inbetriebnahme des Fahrzeugs der zwischenzeitliche Eingang eines Sperrsignals überprüft wird und daß dann, wenn ein Sperrsignal empfangen wurde, die Inbetriebnahme des Fahrzeugs durch Außerbetriebnahme zumindest eines betriebsnotwendigen Steuergeräts verhindert wird.

20. Verfahren nach Anspruch 18 oder 19,
**dadurch gekennzeichnet,**
daß nach dem Empfang des Sperrsignals eine Ortung des Fahrzeugs durchgeführt wird und daß zumindest einmal ein Ortssignal ausgesandt wird.

21. Verfahren nach Anspruch 20,
**dadurch gekennzeichnet,**
daß bei jedem Versuch der Inbetriebnahme des Fahrzeugs ein Ortssignal ausgesandt wird.

22. Verfahren nach Anspruch 1,
**dadurch gekennzeichnet,**
daß der Abfragezeitraum ab dem Aussenden des ersten Meldesignals gemessen wird, das auf den Erhalt des zuletzt empfangenen Freigabesignals erfolgt.

23. Verfahren nach Anspruch 1,
**dadurch gekennzeichnet,**
daß zur Wiederinbetriebnahme eines durch die Außerbetriebnahme zumindest eines betriebsnotwendigen Steuergeräts stillgesetzten Fahrzeugs, das Fahrzeug ein von der Zentrale ausgesendetes Betriebsfreigabesignal empfängt, wodurch von dem Diebstahlschutzsteuergerät über die Kommunikationsstruktur die Außerbetriebnahme des zumindest einen betriebsnotwendigen Steuergeräts aufgehoben wird.

24. Verfahren nach Anspruch 1 oder 23,
**dadurch gekennzeichnet,**
daß zur Wiederinbetriebnahme eines durch die Außerbetriebnahme zumindest eines betriebsnotwendigen Steuergeräts stillgesetzten Fahrzeugs, fahrzeugseitig eine mit dem Diebstahlschutzsteuergerät verbundene Dateneingabeschnittstelle angeordnet ist, wobei zur Wiederinbetriebnahme des zumindest einen betriebsnotwendigen Steuergeräts zumindest die Eingabe eines als gültig erkannten Codes über die Dateneingabeschnittstelle erforderlich ist.

## Claims

1. Method for protecting vehicles against unauthorized use, a communication structure making possible, at the vehicle end, the exchange of data at least between a receiving device, a mobile communication system, an anti-theft control unit and at least one operationally necessary control unit, and the receiving device and a transmitting device making possible, at the vehicle end, transmission of data between the vehicle and a master station,
characterized in that
• the anti-theft control unit transmits a status signal to the master station via the transmitting device when enabling is cancelled, which status signal contains at least one identification of the vehicle,
• it is checked at the master station end, on the basis of the received status signal, whether an indication of an unauthorized use of the vehicle has been issued,
in which case if such an indication has not been issued, an enabling signal, which makes the further operation of the vehicle possible, is transmitted from the master station to the vehicle,
• when the enabling signal is received, the anti-theft control unit prolongs the enabling by a prescribed degree, and in that
• at least if no enabling signal is received by the receiving device, at the latest after a defined interrogation time period has expired, the deactivation of the at least one operationally necessary control unit is brought about and at least one locating signal which represents the current location of the vehicle determined on the basis of a locating process carried out at the vehicle end is broadcast by the transmitting device of the vehicle.

2. Method according to Claim 1, characterized in that the anti-theft control unit is connected to an immobilizer, an attempt to activate the vehicle without authorization leading to the broadcasting of a status signal which contains this information.

3. Method according to Claim 2, characterized in that a status signal which contains the information relating to an attempt to activate the vehicle without authorization is evaluated as an indication of an unauthorized use of the vehicle and an enabling signal is no longer broadcast.

4. Method according to Claim 1, characterized in that the anti-theft control unit comprises a function check at least of the communication system, of the transmitting device, of the receiving device and of the anti-theft control unit, degradation of the system integrity leading to the broadcasting of a status signal which contains this information.

5. Method according to Claim 4, characterized in that a status signal which contains information relating to the degradation of the system integrity is evaluated as an indication of an unauthorized use of the vehicle and an enabling signal is no longer broadcast.

6. Method according to one of Claims 1 to 5, characterized in that the broadcast status signal contains the locating signal.

7. Method according to Claim 1, characterized in that, if an enabling signal is not received by the receiving device of the vehicle after the broadcasting of a status signal, a current locating signal is broadcast periodically in a fixed chronological sequence.

8. Method according to Claim 1, characterized in that the chronologically fixed sequence comprises two locating signals which are broadcast successively within an interval and one waiting time, adjoining the interval, without the broadcasting of a locating signal.

9. Method according to Claim 8, characterized in that the interval has a duration of less than one minute, in particular of less than 30 seconds.

10. Method according to Claim 1, characterized in that the cancelling of the enabling consists in a prescribed time interval, which is independent of the use of the vehicle, being exceeded.

11. Method according to Claim 1, characterized in that the cancelling of the enabling consists in a prescribed operating interval for the operating period of the vehicle being exceeded.

12. Method according to Claim 1, characterized in that the cancelling of the enabling consists in a prescribed distance travelled being exceeded.

13. Method according to Claim 1, characterized in that the cancelling of the enabling consists in a prescribed number of activations of the vehicle being exceeded.

14. Method according to Claim 1, characterized in that the cancelling of the enabling consists in the fact that the locating process carried out by the vehicle leads to the realization that it has left a specific prescribed geographical area.

15. Method according to Claim 1, characterized in that the cancelling of the enabling consists in the fact that the locating process carried out by the vehicle leads to the realization that a specific prescribed geographical area is entered.

16. Method according to Claim 1, characterized in that the cancelling of the enabling occurs as a result of intentional activation of a switching device by an occupant of the vehicle.

17. Method according to Claim 16, characterized in that the switching device is a switch which can be activated by the driver.

18. Method according to Claim 1, characterized in that when a disabling signal which has been broadcast by the master station is received by the receiving device, a deactivation of at least one operationally necessary control unit is carried out by the anti-theft control unit.

19. Method according to Claim 18, characterized in that when the vehicle is activated it is checked whether a disabling signal has been received in the meantime and in that if a disabling signal has been received the activation of the vehicle is prevented by the deactivation of at least one operationally necessary control unit.

20. Method according to Claim 18 or 19, characterized in that after the reception of the disabling signal a vehicle-locating process is performed, and in that a locating signal is broadcast at least once.

21. Method according to Claim 20, characterized in that a locating signal is broadcast at every attempt to activate the vehicle.

22. Method according to Claim 1, characterized in that the interrogation time period is measured starting from the broadcasting of the first status signal which takes place in response to the reception of the last enabling signal to be received.

23. Method according to Claim 1, characterized in that for reactivating, a vehicle which has been disabled by the deactivation of at least one operationally necessary control unit, the vehicle receives an operation enabling signal broadcast by the master station, as a result of which the deactivation of the at least one operationally necessary control unit is cancelled by the anti-theft control unit via the communication structure.

24. Method according to Claim 1 or 23, characterized in that for reactivating a vehicle which has been disabled by the deactivation of at least one operationally necessary control unit, a data input interface which is connected to the anti-theft control unit is arranged at the vehicle end, at least the inputting of a code, which has been detected as valid, via the data input interface being required in order to reactivate the at least one operationally necessary control unit.

## Revendications

1. Procédé pour garantir des véhicules à l'égard d'une utilisation non autorisée, dans lequel, dans le véhicule, une structure de communication permet l'échange de données au moins entre un appareil récepteur d'un système de communication mobile, un appareil de commande de protection antivol et au moins un appareil de commande nécessaire pour la mise en service, et dans lequel, côté véhicule, l'appareil récepteur et un appareil émetteur permettent une transmission de données entre le véhicule et une centrale,
caractérisé
par le fait que
. lors de la péremption d'une autorisation de mise en service, l'appareil de commande de protection antivol envoie à la centrale, par l'intermédiaire de l'appareil émetteur, un signal d'annonce qui contient au moins une identification du véhicule,
. sur la base du signal d'annonce reçu, côté centrale, on vérifie s'il y a une indication concernant une utilisation non autorisée du véhicule,
sur quoi, s'il n'y a pas une telle indication, un signal d'autorisation de mise en service, qui permet la poursuite de la mise en service du véhicule, est transmis par la centrale au véhicule,
. lors de la réception du signal d'autorisation de mise en service, l'appareil de commande de protection antivol prolonge l'autorisation de mise en service d'une valeur prescrite, et par le fait que
. au moins si aucun signal d'autorisation de mise en service n'est reçu par l'appareil récepteur, au plus tard après écoulement d'un temps d'interrogation défini, la mise hors service de l'appareil de commande, dont il y a au moins un, nécessaire pour la mise en service, est ordonnée et au moins un signal de localisation, qui représente la position actuelle du véhicule déterminée sur la base d'une localisation effectuée côté véhicule, est émis par l'appareil d'émission du véhicule.

2. Procédé selon la revendication 1,
caractérisé
par le fait que l'appareil de commande de protection antivol est relié à un verrou interdisant de partir, de sorte qu'une tentative de mettre en service le véhicule sans autorisation conduit à l'émission d'un signal d'annonce contenant cette information.

3. Procédé selon la revendication 2,
caractérisé
par le fait qu'un signal d'annonce contenant l'information relative à une tentative de mettre le véhicule en service sans autorisation est traité comme indication d'une utilisation non autorisée du véhicule et qu'il n'est plus émis de signal d'autorisation de mise en service.

4. Procédé selon la revendication 1,
caractérisé
par le fait que l'appareil de commande de protection antivol comporte une vérification de fonctionnement d'au moins le système de communication, l'appareil émetteur, l'appareil récepteur et l'appareil de commande de protection antivol, une dégradation de l'intégrité du système conduisant à l'émission d'un signal d'annonce contenant cette information.

5. Procédé selon la revendication 4,
caractérisé
par le fait qu'un signal d'annonce contenant des informations
relatives à la dégradation de l'intégrité du système est traité comme indication d'une utilisation non autorisée du véhicule et qu'il n'est plus émis de signal d'autorisation de mise en service.

6. Procédé selon l'une des revendications 1 à 5,
caractérisé
par le fait que le signal d'annonce émis contient le signal de position.

7. Procédé selon la revendication 1,
caractérisé
par le fait que, si après l'émission d'un signal d'annonce, un signal d'autorisation de mise en service n'est pas reçu par l'appareil récepteur du véhicule, un signal de position actuel est émis périodiquement selon une séquence temporelle déterminée.

8. Procédé selon la revendication 1,
caractérisé
par le fait que la séquence temporelle déterminée est constituée de deux signaux de position émis successivement à l'intérieur d'un intervalle de temps ainsi que d'un temps d'attente sans émission d'un signal de position, qui vient à la suite de cet intervalle de temps.

9. Procédé selon la revendication 8,
caractérisé
par le fait que l'intervalle de temps présente une durée de moins d'un minute, en particulier de moins de 30 secondes.

10. Procédé selon la revendication 1,
caractérisé
par le fait que la péremption de l'autorisation de mise en service résulte d'un dépassement d'un intervalle de temps prescrit, indépendamment de l'utilisation du véhicule.

11. Procédé selon la revendication 1,
caractérisé
par le fait que la péremption de l'autorisation de mise en service résulte d'un dépassement d'un intervalle de temps prescrit, pour la durée de mise en service de véhicule.

12. Procédé selon la revendication 1,
caractérisé
par le fait que la péremption de l'autorisation de mise en service résulte d'un dépassement d'un parcours prescrit.

13. Procédé selon la revendication 1,
caractérisé
par le fait que la péremption de l'autorisation de mise en service résulte d'un dépassement d'un nombre prescrit de mises en service du véhicule.

14. Procédé selon la revendication 1,
caractérisé
par le fait que la péremption de l'autorisation de mise en service résulte de ce que la localisation, effectuée par le véhicule, conduit à déterminer que le véhicule a quitté un territoire prescrit, géographiquement déterminé.

15. Procédé selon la revendication 1,
caractérisé
par le fait que la péremption de l'autorisation de mise en service résulte de ce que la localisation, effectuée par le véhicule, conduit à déterminer que le véhicule circule dans un territoire prescrit, géographiquement déterminé.

16. Procédé selon la revendication 1,
caractérisé
par le fait que la péremption de l'autorisation de mise en service résulte de la manoeuvre volontaire d'un appareil de mise en circuit par un occupant du véhicule.

17. Procédé selon la revendication 16,
caractérisé
par le fait que l'appareil de mise en circuit est un interrupteur que le conducteur peut manoeuvrer.

18. Procédé selon la revendication 1,
caractérisé
par le fait que, lors de la réception, par l'appareil récepteur, d'un signal de verrouillage émis par la centrale, l'appareil de commande de protection antivol procède à la mise hors service d'au moins un appareil de commande nécessaire pour la mise en service.

19. Procédé selon la revendication 18,
caractérisé
par le fait que, lors de la mise en service du véhicule, il y a vérification de l'entrée d'un signal de verrouillage entre temps et que, si un signal de verrouillage a été reçu, la mise en service du véhicule est interdite par mise hors service d'au moins un appareil de commande nécessaire pour la mise en service.

20. Procédé selon la revendication 18 ou 19,
caractérisé
par le fait qu'après la réception du signal de verrouillage une localisation du véhicule est effectuée et qu'un signal de position est émis au moins une fois.

21. Procédé selon la revendication 20,
caractérisé
par le fait qu'à chaque tentative de mise en service du véhicule un signal de position est émis.

22. Procédé selon la revendication 1,
caractérisé
par le fait que l'intervalle de temps d'interrogation est mesuré à partir de l'émission du premier signal d'annonce qui suit la réception du signal d'autorisation de mise en service reçu en dernier lieu.

23. Procédé selon la revendication 1,
caractérisé
par le fait que pour la remise en service d'un véhicule arrêté par la mise hors service d'au moins un appareil de commande nécessaire pour la mise en service, le véhicule reçoit un signal d'autorisation de mise en service émis par la centrale, sur quoi l'appareil de commande de protection antivol annule, par l'intermédiaire de la structure de communication, la mise hors service de l'appareil de commande, dont il y a au moins un, nécessaire pour la mise en service.

24. Procédé selon la revendication 1 ou 23,
caractérisé
par le fait que pour la remise en service d'un véhicule arrêté par la mise hors service d'au moins un appareil de commande nécessaire pour la mise en service, est disposée, côté véhicule, une interface d'entrée des données reliée à l'appareil de commande de protection antivol, sur quoi, pour la remise en service de l'appareil de commande, dont il y a au moins un, nécessaire pour la remise en service, est au moins nécessaire l'entrée, par l'intermédiaire de l'interface d'entrée des données, d'un code reconnu valable.
